# EUROPÄISCHE PATENTSCHRIFT

(11) **EP 1 790 865 B1**
(45) Veröffentlichungstag und Bekanntmachung des Hinweises auf die Patenterteilung: **27.08.2008**
(21) Anmeldenummer: 06024193.2
(22) Anmeldetag: 22.11.2006
(51) Int. Cl.: F16C 3/08, F16C 3/14

(54) **Gegossene, hohle Kurbelwelle**
Cast hollow crankshaft
Vilebrequin creux coulé

(30) Priorität: 24.11.2005 DE 102005056280
(43) Veröffentlichungstag der Anmeldung: 30.05.2007
(73) Patentinhaber: R.A.E.-GmbH, 65428 Rüsselsheim (DE)
(72) Erfinder: Henkel, Horst, 35232 Dautphetal-Friedensdorf (DE)
(74) Vertreter: Wolf, Michael

(56) Entgegenhaltungen:
- DE-B- 1 022 426

## Beschreibung

Die Erfindung betrifft eine gegossene hohle Kurbelwelle mit Kurbelwellen-Lagerzapfen, Pleuel-Lagerzapfen und als Rohre eingegossenen Ölkanälen, die jeweils vom Außenumfang eines Kurbelwellen-Lagerzapfens zum Außenumfang eines Pleuel-Lagerzapfens verlaufen und der Lagerschmierung dienen, wobei die Kurbelwelle in einem Gießverfahren mit verlorenen Formen und Dauermodell, bei welchem zur Ausbildung von Hohlräumen in den Kurbelwellen-Lagerzapfen und Pleuel-Lagerzapfen feste Gießkerne in einer geteilten Außenform gelagert sind, hergestellt ist.

Kurbelwellen sind wesentlicher Bestandteil von Maschinen (z.B. PKW- und LKW-Fahrzeugmotoren, Schiffsmotoren, stationären Motoren usw.). Eine Kurbelwelle weist dabei Kurbelwellen-Lagerzapfen auf, die der Lagerung der Kurbelwelle in Wellenlagern dienen. Ferner umfaßt sie Pleuel-Lagerzapfen für die Lagerung von Pleuelstangen in Pleuellagern. Zur Schmierung der Pleuellager sind Ölkanäle vorgesehen, die sich jeweils vom Außenumfang eines Kurbelwellen-Lagerzapfens zum Außenumfang eines Pleuel-Lagerzapfens erstrecken, also durch den Wellenkörper verlaufen. Das den Wellenlagern in bekannter Weise über eine zentrale Ölversorgung jeweils zugeführte Schmiermittel wird bei Rotation der Kurbelwelle an das Pleuellager, mit dem das jeweilige Wellenlager über den betreffenden Ölkanal verbunden ist, weitergeleitet.

Kurbelwellen sind aufgrund der sich beim Maschinenbetrieb zeitlich und örtlich stark ändernden Kräfte, Dreh- und Biegemonente und der daraus resultierenden Schwingungen sehr starken Belastungen ausgesetzt. Daher werden solche Wellen überwiegend massiv gefertigt, und zwar werden hochbelastete Wellen als Schmiedeteile aus z.B. Stahl ausgeführt und geringer belastete Wellen aus Stahl oder Gußeisen geeigneter Wahl gegossen. Die Ölkanäle, die jeweils zwischen einem Kurbelwellen-Lagerzapfen und einem Pleuel-Lagerzapfen verlaufen, werden nachträglich in den Wellenkörper eingebracht, i.d.R. gebohrt. Alternativ ist bekannt (z.B. aus der DE 196 12 678 A1), zur Ausbildung von Ölkanälen entsprechend positionierte Metallröhrchen beim Gießen der Kurbelwelle mit einzugießen. Nachteilig bei den massiven Kurbelwellen sind das sich auf den Kraftstoffverbrauch der Motoren negativ auswirkende hohe Gewicht der Wellen und die kostenintensive Fertigung bei den geschmiedeten Wellen. Das nachträgliche Einbringen der Ölkanäle birgt darüber hinaus die Gefahr, daß Bohrrückstände in der Kurbelwelle verbleiben, was zu einer Schädigung des Motors führen kann.

Zur Gewichtsreduktion sind beispielsweise aus der DE 42 39 691 A1 und der DE 195 36 349 C1 hohl ausgeführte Kurbelwellen bekannt, die aus einzelnen Platten und Rohren bzw. aus mehreren Segmenten zusammengesetzt (verschweißt) sind. Die Ölkanäle sind in Form von eingelegten Rohren oder in Form von in die Segmente eingebrachten Öffnungen realisiert. Derartige Wellen sind aufwändig in der Herstellung sowie relativ instabil und daher nicht für höhere Belastungen geeignet.

Ferner sind weiter unten näher beschriebene, in einem konventionellen Gießverfahren mit verlorenen Formen hohlgegossene Kurbelwellen bekannt, bei denen aufgrund eingelegter fester Gießkerne ein Hohlraum im Inneren der Kurbelwelle freigespart ist. Verlorene Außenformen (z.B. Maskenformen, Handformen, Maschinenformen) umfassen in der Regel einen mineralischen, feuerfesten, körnigen Grundstoff mit einem Bindemittel sowie oft mit verschiedenen Zusätzen (z.B. zur Erzielung guter Oberflächen) und werden i.d.R. mit Hilfe eines Dauermodells erzeugt. Nach jedem Abguss werden derartige Außenformen zerstört. Gießkerne für die Bildung der Innenkontur sind in bekannter Weise mit unterschiedlichen und üblichen Fertigungsverfahren herstellbar.

Bei den bekannten Verfahren zur Herstellung hohlgegossener Kurbelwellen lagern die Gießkerne für die Bildung der Innenkontur der Kurbelwelle über Materialfortsätze der Gießkerne direkt in der Außenform (über sogenannte Kernlager), wobei die Außenform die Außenkontur der Kurbelwelle bestimmt. Um den auf die Kerne beim Gießen einwirkenden Kräften (insbesondere Auftriebskräften) Stand halten zu können, bedarf es genügend starker Lagerungsquerschnitte der Kerne. Daher weisen die Wellenkörper derart hohlgegossener Kurbelwellen an der Außenkontur der Wellen zahlreiche großdimensionierte Kernlöcher (Lagerungsstellen der Kerne) auf, die nach dem Gießen dazu dienen, das Kernmaterial vollständig entfernen zu können. Solche Kurbelwellen sind in der Praxis herstellbar, aber nicht in der Praxis (in Serie) in Brennkraftmaschinen einsetzbar, da sie die erforderlichen Festigkeitswerte nicht erreichen und auf Dauer nicht den beim Maschinenbetrieb auftretenden Kräften (insbesondere Torsions- und Biegekräften) Stand halten können. Ferner kann durch die zahlreichen Kernlöcher beim Maschinenbetrieb Schmiermittel in den Kurbelwelleninnenraum gelangen, was Unwuchten zur Folge hat.

Die in der DE 1 022 426 B gezeigte hohlgegossene Kurbelwelle weist bei im wesentlichen gleichmäßiger Wandstärke mehrere, z.T. S-förmig ausgebildete, durch entsprechend geformte Gießkerne freigesparte Hohlräume auf, die sich durch Kurbelarme, Pleuellager und Kurbelwellenlager erstrecken. Bedingt durch die Lagerung der Gießkerne über stirnseitige Öffnungen als Kernlager in der Außenform ist die Außenkontur der Kurbelwelle an mehreren Stellen großräumig durchbrochen, wodurch die Kurbelwelle erheblich geschwächt ist. Durch die Anordnung der Hohlräume ergeben sich unterschiedliche, zusammenhängende Materialstränge. Zusammenhängende Materialstränge und Kurbelarme mit ovalem Querschnitt dienen der Stabilitätserhöhung der Kurbelwelle. Zur Schmiermittelversorgung der Pleuellager sind vorgeformte, entsprechend positionierte Rohre bzw. ein zusammengesetztes Rohrsystem beim Gießen der Kurbelwelle mit eingegossen worden, die jeweils freiliegend durch die Hohlräume verlaufen.

Die GB 481 928 zeigt eine hohlgegossene Kurbelwelle ohne Ölkanäle. Zur Erhöhung der mechanischen Stabilität sind Versteifungstrennwände eingegossen, die den Innenraum der Kurbelwelle in zahlreiche zellenähnliche Hohlräume untergliedern. Ferner werden zur Stabilitätserhöhung bogenförmige Übergänge der Trennwände in die angrenzenden Wände und lokale interne Härtung vorgeschlagen.

In der DE 678 539 C wird eine hohlgegossene Kurbelwelle ohne Ölkanäle beschrieben. Zur Verbesserung der Stabilität wird vorgeschlagen, daß die Kurbelwelle entsprechend den verschieden großen äußeren Krafteinwirkungen verschieden große Wandstärken bzw. exzentrische Hohlräume aufweist. Zusätzlich können zur Versteifung eine oder mehrere längs und/oder senkrecht zur Kurbelwellenlängsachse verlaufende Rippen vorhanden sein.

In der nicht vorveröffentlichten DE 10 2004 026 058 wird eine gegossene hohle Kurbelwelle mit Kurbelwellen-Lagerzapfen, Pleuel-Lagerzapfen, Kurbelwangen, Massenausgleichen und Ölkanälen beschrieben. Zur Erhöhung der mechanischen Belastbarkeit, insbesondere der Torsions- und Biegesteifigkeit, der Kurbelwelle wird im Inneren der Welle ein durchgängiges Versteifungselement vorgesehen, das von einem Pleuel-Lagerzapfen über eine daran angrenzende Kurbelwange zu einem benachbarten Kurbelwellen-Lagerzapfen durchgängig verläuft. Die Lagerung der für die Herstellung der Kurbelwelle benötigten Gießkerne erfolgt in den mechanisch weniger stark belasteten Konturenbereichen der Massenausgleiche, um die Außenkontur der Kurbelwelle in den Bereichen der Kurbelwellen-Lagerzapfen und Pleuel-Lagerzapfen nicht zu schwächen.

Die WO 03/016729 A1 beschreibt eine gegossene Leichtbaukurbelwelle, bei welcher zur Gewichtsreduktion Verdrängungselemente wie Metallschaumelemente oder ummantelte Eisen- bzw. Stahlhohlkugeln in das Innere von Pleuel- und Kurbelwellen-Lagerzapfen eingegossen werden, wobei die Verdrängungselemente nach dem Gießen in der Kurbelwelle verbleiben. Während des Gießens können die Verdrängungslemente in der Gießform durch gerade Metallrohre, die Ölkanäle darstellen können, fixiert sein. Die dargestellten Metallrohre sollen vom Außenumfang eines Kurbelwellen-Lagerzapfens schräg durch die Kurbelwelle zum Außenumfang eines Pleuel-Lagerzapfens an der gegenüberliegenden Seite der Kurbelwelle verlaufen.

Der Erfindung liegt die Aufgabe zugrunde, eine hohlgegossene Kurbelwelle mit hoher mechanischer Stabilität zu schaffen, die in Serie herstellbar und in Brennkraftmaschinen dauerhaft einsetzbar ist, sowie ein Verfahren für die Herstellung einer derartigen Kurbelwelle bereitzustellen.

Diese Aufgabe wird erfindungsgemäß gelöst durch eine gegossene Kurbelwelle mit den Merkmalen des Anspruches 1 und ein Verfahren mit den Merkmalen des Anspruchs 13.

Erfindungsgemäß sind die zur Hohlraumfreisparung in einem Kurbelwellen-Lagerzapfen und einem benachbarten Pleuel-Lagerzapfen erforderlichen Gießkerne, die nach dem Gießen wieder aus den Hohlräumen entfernt worden sind, als Kerneinheit über den als Rohr in beide Kerne integrierten Ölkanal lagegenau in Position zur Außenform gebracht. Die Lagerung der Kerne erfolgt also nicht, wie im Stand der Technik üblich, über entsprechend groß dimensionierte Materialfortsätze der Kerne direkt in der Außenform (sogenannte Kernlager). Eine erfindungsgemäße Kurbelwelle weist somit keine kernlagerungsbedingt großdimensionierten Öffnungen in der Außenkontur der Kurbelwelle an den Stirnseiten der Pleuellager und Kurbelwellenlager auf und erreicht dadurch eine höhere mechanische Stabilität.

Im Rahmen der Erfindung werden im Unterschied zur WO 03/016729 A1 solche Kerne eingesetzt, die nach dem Gießprozeß aus den Hohlräumen wieder entfernbar sind, z.B. Sandkerne. Dadurch, dass das Kernmaterial wieder komplett aus den Hohlräumen entfernt wird, lässt sich eine höhere Gewichtsreduktion als mit im Inneren verbleibenden Verdrängungskörpern (z.B. aus Metallschaum) erzielen, was sich vorteilhaft auf den Kraftstoffverbrauch, auf die Emissionswerte und das Laufverhalten der Maschine auswirkt.

Um seine Funktion als Ölleitung zwischen einem Kurbelwellenlager und einem Pleuellager und als Lagerungsmittel der Kerne während der Herstellung der Kurbelwelle erfüllen zu können, tritt ein Ende des Ölkanales am Kurbelwellen-Lagerzapfen zur Ölaufnahme und ein anderes Ende am Pleuel-Lagerzapfen zur Ölabgabe aus. Dabei sind diese Enden des Ölkanales - bezogen auf die verwendete Gießform - jeweils auf derselben Seite der Kurbelwelle angeordnet, damit die gebildete Kerneinheit bei der Kurbelwellenherstellung in einer Außenformhälfte sicher gelagert werden kann.

Um die Kerneinheit über den integrierten Ölkanal bei der Kurbelwellenherstellung lagern zu können, wird erfindungsgemäß vorgeschlagen, dass die Ölkanalenden verlängert ausgebildet werden, so dass sie jeweils über den Außenumfang der zu gießenden Lager hinausragen. Diese verlängerten Enden bilden Lagerungsenden, die in korrespondierende Ausnehmungen in einer Außenformhälfte eingesetzt werden, woraus eine gute Längs- und Querfixierung sowie eine Verdrehsicherung der Kerneinheit während des Gießprozesses resultiert. Während der Herstellung einer erfindungsgemäßen Kurbelwelle sind somit die Kerne der Kerneinheit über die Lagerungsenden des integrierten Ölkanales in derselben Außenformhälfte gelagert. An dem Roh-Gussteil werden die Lagerungsenden im Rahmen von weiteren Bearbeitungsschritten wieder entfernt.

Eine Entkernungsöffnung in der Außenkontur der Kurbelwelle mit Verbindung zu einem freigesparten Hohlraum ist erforderlich, um das Kernmaterial nach dem Gießprozeß aus dem jeweiligen Hohlraum entfernen zu können. Da die Größe der Entkernungsöffnung nicht durch Kernlagerungsaspekte bedingt ist, ist die Öffnung erfindungsgemäß kleindimensioniert ausgebildet, d.h. sie ist nur so groß gewählt, wie es für das Entkernen des freigesparten Lagerzapfens des gegossenen Rohteiles erforderlich ist. Dabei hängen die konkreten Abmessungen insbesondere von der Körnung des verwendeten Kernmateriales und dem Volumen des freigesparten Hohlraumes ab. Vorzugsweise werden im Rahmen der Erfindung solche Gießkerne eingesetzt, die nach dem Gießen zu losem, rieselfähigem Kernmedium zerfallen (mit oder ohne Fremdeinwirkung von außen). Im Vergleich zu einer aus dem Stand der Technik bekannten kernlagerungsbedingten Öffnung in der Außenkontur ist es im Rahmen der Erfindung beispielsweise möglich und vorteilhaft, den Durchmesser der Entkernungsöffnung nur halb so groß oder noch kleiner zu wählen, wodurch die mechanische Stabilität der Kurbelwelle erhöht ist.

Zum Entfernen des Kernmateriales reicht pro Lagerzapfen eine Entkernungsöffnung, die im Bereich außerhalb der Lagerfläche des Lagerzapfens angeordnet ist. Vorteilhaft ist jedoch, wenn pro Lagerzapfen zwei Entkerungsöffnungen vorgesehen sind, da sich die Hohlräume auf diese Weise schneller entkernen lassen. Die Entkernungsöffnungen können nachträglich durch mechanische spanabhebende Bearbeitung in die gegossene Kurbelwelle eingebracht sein. Vorteilhafterweise sind sie bereits beim Gießen ausgebildet worden, vorzugsweise indem zur Hohlraumfreisparung in den Kurbelwellen-Lagerzapfen und Pleuel-Lagerzapfen Gießkerne verwendet worden sind, die jeweils mindestens einen Fortsatz zur Ausbildung einer kleindimensionierten Entkernungsöffnung in der Außenkontur der gegossenen Kurbelwelle aufweisen. Durch diese Maßnahme wird der Bearbeitungsaufwand an der gegossenen Kurbelwelle verringert.

Dadurch, dass die Außenkontur der Kurbelwelle erfindungsgemäß im wesentlichen geschlossen ist, wird zum einen eine hohe mechanische Stabiltät erreicht und zum anderen die Gefahr verringert, daß beim Motorbetrieb Öl in die Hohlräume der Kurbelwelle gelangen und zu Unwuchten führen kann.

Gemäß einer vorteilhaften Weiterbildung der Erfindung ist die mindestens eine Entkernungsöffnung für einen Pleuel-Lagerzapfen im Bereich einer Pleuellagerschulter angeordnet. Die Pleuellagerschulter ist dabei der Bereich der Außenkontur der Kurbelwelle, der den Lagerzapfen stirnseitig abschließt und sich bis zum benachbarten Kurbelwellenlager erstreckt.

Gemäß einer weiteren vorteilhaften Ausführung der Erfindung ist die mindestens eine Entkernungsöffnung für einen Kurbelwellen-Lagerzapfen im Bereich der Achsmitte des Kurbelwellen-Lagerzapfens angeordnet. In diesem Bereich lässt sich auf relativ unaufwändige Weise eine Öffnung vorsehen bzw. einbringen. Alternativ könnte die Entkerung des Kurbelwellen-Lagerzapfens beispielsweise auch über eine in einem Massenausgleich vorgesehene Öffnung erfolgen.

Vorteilhafterweise kann der Durchmesser der Entkernungsöffnungen für eine PKW-Kurbelwelle 5 bis 12 mm, vorzugsweise 6 bis 8 mm, und für eine Nutzfahrzeug-Kurbelwelle vorteilhaft 12 bis 25 mm, vorzugsweise 15 bis 20 mm, betragen.

Ferner wird die oben genannte Aufgabe erfindungsgemäß gelöst durch ein Verfahren zur Herstellung einer in einem Gießverfahren mit verlorenen Formen und Dauermodell hohlgegossenen Kurbelwelle mit den im kennzeichnenden Teil des Anspruches 13 angegebenen Merkmalen, wobei die Kurbelwelle Kurbelwellen-Lagerzapfen und Pleuel-Lagerzapfen, in denen jeweils ein Hohlraum freigespart ist, und als Rohre eingegossene Ölkanäle aufweist, die jeweils vom Außenumfang eines Kurbelwellen-Lagerzapfens zum Außenumfang eines Pleuel-Lagerzapfens verlaufen und der Lagerschmierung dienen.

Für die Ausbildung von Hohlräumen in der Kurbelwelle wird eine Kerneinheit gebildet, die einen Gießkern für die Ausbildung des Hohlraumes in einem Kurbelwellen-Lagerzapfen, einen Gießkern für die Ausbildung des Hohlraumes in einem benachbarten Pleuel-Lagerzapfen und ein in beide Kerne integriertes vorgeformtes Rohr als späteren Ölkanal umfasst. Die beiden Kerne werden also über den Ölkanal fest miteinander verbunden. Der Ölkanal hält die Position der Kerne zueinander und bestimmt deren exakte Lage in der Außenform und damit in der zu gießenden Kurbelwelle.

Um die Kerneinheit in der Außenform lagern zu können, wird die Länge des Ölkanales derart gewählt, dass seine Enden jeweils über den Außenumfang der zu gießenden Lager hinausragen und Lagerungsenden bilden. Ferner ist der integrierte Ölkanal derart geformt worden, dass ein Lagerungsende am Kurbelwellen-Lagerzapfen und ein Lagerungsende am Pleuel-Lagerzapfen jeweils auf derselben Kurbelwellenseite liegen. Durch die Anordnung von zwei Lagerungsenden an derselben Kurbelwellenseite ist es möglich, die Kerneinheit genau längs und quer sowie verdrehsicher in einer Außenformhälfte zu fixieren. Die Lagerungsenden sind derart angeordnet, dass sie beim Einsetzen der Kerneinheit in die Außenform im wesentlichen senkrecht zur Teilungsebene der Außenform orientiert sind. Im wesentlichen senkrecht bedeutet dabei, dass die Lagerungsenden auch leicht schräg angeordnet sein können, insbesondere wenn sie - was vorzugsweise vorgeschlagen wird - an den Enden in geringem Winkel konisch ausgebildet sind für eine spielfreie Lagerung in der Außenform. Eine schräge Anordnung ist allerdings nur so weit möglich, wie der Konus des Rohres nicht überschritten wird, da die Herstellung der Außenformhälfte ansonsten problematisch ist.

Eine fertige Kerneinheit wird mit den Lagerungsenden in Ausnehmungen, die in einer Außenformhälfte an entsprechenden Stellen vorgesehen wurden, eingesetzt. Die Anzahl der Kerneinheiten hängt von der Anzahl der Zylinderräume des jeweiligen Motors ab. Pro Zylinderraum wird eine Kerneinheit vorgesehen. Mehrere fertige Kerneinheiten werden mit ihren Lagerungsenden entsprechend in die Außenform eingesetzt. Je nach Ausführung des eingegossenen Ölkanales werden ggf. noch Stützen oder dergleichen eingebracht, um die Kerneinheiten beim Gießen gegen ein durch die Auftriebskräfte der Schmelze bedingtes Aufschwimmen zu sichern. Nach Fertigstellung der kompletten Gießform wird die Kurbelwelle nach dem jeweils verwendeten Gießverfahren gegossen.

Nach dem Gießen werden die Gießkerne über in Bereichen außerhalb der Lagerflächen von Kurbelwellen-Lagerzapfen und Pleuel-Lagerzapfen ausgebildete bzw. eingebrachte kleindimensionierte Entkernungsöffnungen aus den Hohlräumen entfernt. Ebenso entfernt werden die Lagerungsenden des Ölkanales bzw. der Ölkanäle. Ferner werden an dem Rohgussteil weitere Bearbeitungsschritte vorgenommen.

Ein Problem, mit einem konventionellen Gießverfahren eine hohl ausgeführte Kurbelwelle zu erzeugen, resultiert daraus, dass die Pleuel-Lagerzapfen, d.h. die Kurbeln, in unterschiedlichen Winkelstellungen angeordnet sind, was zu Schwierigkeiten bei der Herstellung der Gießformen und der Innenkerne führt. Ausserdem muss nach dem Gießen der Hohlraum rückstandsfrei entkernbar sein.

In einer vorteilhaften Ausführung der Erfindung bzw. des erfindungsgemäßen Verfahrens ist eine Kurbelwelle, bei der die Pleuel-Lagerzapfen in einer Ebene liegen, insbesondere eine Vierzylinder-Kurbelwelle, in einem Gießverfahren mit zweigeteilter Außenform, insbesondere im Masken-Gießverfahren, Grünform-Gießverfahren oder Kaltharzform-Gießverfahren, hergestellt. Weil bei einer derartigen Kurbelwelle die Pleuel-Lagerzapfen in einer Ebene (0° bzw. 180°) liegen, kann eine längs in linke und rechte Formmasken-Hälfte geteilte Außenform bzw. eine horizontal in Oberkasten und Unterkasten geteilte Außenform zum Einsatz kommen. In die geteilte Außenform werden entsprechende erfindungsgemäße, über die Ölkanäle gelagerte Kerneinheiten eingebaut für die Ausbildung der Hohlräume im Kurbelwellen- und Pleuel-Lagerzapfen. Dabei können die Kerneinheiten alle in dieselbe Außenformhälfte eingebaut werden. Es ist jedoch auch möglich und vorteilhaft, einige Kerneinheiten in eine Außenformhälfte und die anderen Kerneinheiten in die andere Außenformhälfte einzubauen.

Kurbelwellen für einen Motor mit einer höheren Zylinderzahl (insbesondere mit Sechszylindern und mehr), bei denen die Pleuellagerzapfen nicht in einer Ebene liegen, werden gemäß einer weiteren vorteilhaften Ausführung der Erfindung bzw. des erfindungsgemäßen Verfahrens in einem Kernblock-Gießverfahren hergestellt. Um die unterschiedlichen Winkelstellungen der Pleuel-Lagerzapfen und die Hohlräume zu realisieren, wird die Außenform (Blockform) für die Außenkontur-Formgebung der Kurbelwelle erfindungsgemäß über die Länge der Welle längs und quer geteilt. Die Teilung quer zur Kurbelwellenlängsachse ist erforderlich, um die unterschiedlichen Winkelstellungen der Pleuel-Lagerzapfen zu realisieren. Durch die Querteilung entstehen mehrere Kernblockeinheiten (auch Etagenkerne genannt). Die Kernblockeinheiten werden wiederum jeweils längs in zwei Hälften geteilt (Teilung längs zur Kurbelwellenlängsachse), um Kerneinheiten zur Hohlraumformgebung einbauen zu können, wobei die Kerneinheiten über die Lagerungsenden der integrierten Ölkanäle jeweils im Bereich eines Kurbelwellen-Lagerzapfens und eines Pleuel-Lagerzapfens in einer Hälfte einer Kernblockeinheit gelagert werden. Bei einer im Kernblock-Gießverfahren erzeugten Kurbelwelle gibt es somit mehrere, sich jeweils über einen Zylinderabstand oder über einen halben Zylinderabstand erstreckende Außenformhälften (Hälften von Kernblockeinheiten), in denen Kerneinheiten über die Ölkanäle gelagert werden bzw. gelagert worden sind.

Ein an einer Stirnseite der späteren Kurbelwelle angeordneter Kurbelwellen-Lagerzapfen kann durch einen gesonderten Gießkern, der also keine Kerneinheit mit einem Pleuellagerzapfen-Kern bildet, freigespart sein. - Dies gilt z.B. auch für eine mit zweigeteilter Außenform hergestellte 4-Zylinder-Kurbelwelle. - Die Hälften der Kernblockeinheiten werden jeweils zusammengefügt und die Kernblockeinheiten zur kompletten Blockform zusammengesetzt.

Das Prinzip des erfindungsgemäßen Kernblock-Gießverfahrens für die Herstellung einer erfindungsgemäßen Kurbelwelle beruht also darauf, daß die komplette Blockform gebildet wird, indem mehrere Kernblockeinheiten, die jede für sich wiederum längsgeteilt sind und in die entsprechende Kerneinheiten einmontiert sind, etagenartig übereinander gestapelt bzw. liegend nebeneinander angeordnet werden. Anschließend wird die Kurbelwelle auf konventionellem Wege gegossen. Der Kernstapel wird i.d.R. stehend gegossen, kann aber mit besonderen Vorkehrungen auch liegend gegossen werden. Die Kurbelwelle wird aus der Blockform entnommen, und das Kernmaterial der Kerneinheiten durch während des Gießens ausgebildete bzw. nachträglich mechanisch eingebrachte, kleindimensionierte Entkernungsöffnungen entfernt.

Es werden mehrere Kernblockeinheiten (Etagenkerne) in Längs- und Querteilung, je nach Ausführung der Konstruktion und Festlegung der Zündfolge, ausgeführt. Die erforderliche Stückzahl der Kernblockeinheiten hängt also von der jeweiligen Konzeption der Kurbelwelle bzw. des Motors ab. Durch den Aufbau der Blockform aus entsprechenden Kernblockeinheiten ist es möglich, Kurbelwellen mit jeder gewünschten Winkelstellung der Pleuel-Lagerzapfen zu erzeugen.

In einer vorteilhaften Ausführung der erfindungsgemäßen Kurbelwelle sind die Ölkanäle jeweils U-förmig ausgebildet. Dafür wird während der Herstellung dieser Kurbelwelle jeweils ein U-förmig gebogenes Rohr in einen Kern zur Hohlraumbildung in einem Kurbelwellen-Lagerzapfen und in einen Kern zur Hohlraumbildung in einem Pleuel-Lagerzapfen integriert und mit eingegossen. Über die beiden erfindungsgemäß verlängerten Lagerungsenden wird die gebildete Kerneinheit in einer ersten Außenformhälfte gelagert. Um das Aufschwimmen der Kerneinheit während des Gießens zu verhindern, ist es bei einem U-förmigen Ölkanal erforderlich, eine Stütze oder dergleichen zum Abstützen an einer gegenüberliegenden zweiten Außenformhälfte vorzusehen, wobei die Stütze außerhalb der Lagerdurchmesser vorzusehen ist.

In einer bevorzugten Ausführung der Erfindung sind die Ölkanäle jeweils als eingegossenes Rohrsystem realisiert, wobei ein Rohrsystem derart zu verstehen ist, dass der eingegossene Ölkanal mehr als zwei Abschnitte bzw. Öffnungen aufweist. Ein eingegossenes Rohrsystem ist in einer vorteilhaften Weiterbildung derart ausgebildet und angeordnet, dass es zwei auf einer Seite der Kurbelwelle angeordnete Enden zur Lagerung der betreffenden Kerneinheit in einer ersten Außenformhälfte während des Gießens und auf einer gegenüberliegenden Lagerseite mindestens ein Abstützungsende zum Abstützen der Kerneinheit an der Innenseite einer zweiten Außenformhälfte aufweist. Im Rahmen des erfindungsgemäßen Herstellungsverfahrens sind für die Bildung eines solchen Ölkanalsystems vorteilhaft mehrere Rohre zu einem Rohrsystem verbunden worden, bevor das gebildete System in die Gießkerne integriert wurde. Dabei wurden die Abmessungen der Rohre derart gewählt, dass auf einer Seite des Rohrsystems zwei verlängerte Lagerungsenden und auf einer gegenüberliegenden Seite mindestens ein Abstützungsende ausgebildet werden. Die Länge des Abstützungsendes ist derart gewählt, dass die Stirnseite des Rohres nach Zusammenbau der Gießform an der zweiten Außenformhälfte anliegt. Ferner ist die Stirnseite vor dem Gießen vorteilhafterweise verschlossen worden, um die Abstützungsfläche zu vergrößern und um das Eindringen von Schmelze zu verhindern. Nach dem Gießen wird das Abstützungsende vorteilhaft wieder geöffnet. Ein in die Hohlraumkerne integriertes Rohrsystem bietet für die Kerne eine gute Verbindung, eine positionsgenaue und verdrehsichere Lagerung der Kerneinheit und - bedingt durch das mindestens eine Abstützungsende - eine gute Armierung gegen Auftriebskräfte bei dem Gießprozess ohne gesonderte Stützen. An der fertigen Kurbelwelle sind an den Außenumfängen von Kurbelwellen-Lagerzapfen und Pleuel-Lagerzapfen mehr als zwei Öffnungen des Ölkanales ausgebildet, wodurch die Ölversorgung der Pleuel-Lagerzapfen verbessert wird.

In einer vorteilhaften Weiterbildung der Erfindung weist ein Ölkanal am Außenumfang eines Pleuel-Lagerzapfens und/oder am Außenumfang eines Kurbelwellen-Lagerzapfens einen länglichen Querschnitt auf. Die Querschnittsform kann beispielsweise einem Rechteck mit gerundeten Ecken entsprechen, oval ausgebildet sein usw. Dabei ist die längere Abmessung der Querschnittsform vorteilhaft in Drehrichtung des betreffenden Lagers angeordnet. Ein derartiger nutförmiger Öffnungsquerschnitt im Lagerbereich hat den Vorteil, dass auch bei einer geringen Lagerbreite seitlich neben der betreffenden Ölkanalöffnung noch genügend Material verbleibt, damit das Schmiermittel nicht zu schnell nach den Seiten aus dem Lager entweichen kann. Ein Ölkanal mit einem derartigen Öffnungsquerschnitt bzw. mit derartigen Öffnungsquerschnitten lässt sich beispielsweise vor dem Eingießen durch Umformung eines Rohres mit runden Querschnitt herstellen. Auch ist es möglich, zwei entsprechend vorgeformte Ölkanalhälften vor dem Eingießen zu einer Einheit zu verbinden, z.B. durch Kontaktschweißen oder dergleichen. Im Inneren der Kurbelwelle kann die Querschnittsform des Ölkanales beliebig sein.

In den Zeichnungen sind exemplarisch Ausführungsbeispiele einer erfindungsgemäßen Kurbelwelle dargestellt. Es zeigen:
- Fig. 1: einen schematischen, ausschnittsweisen Längsschnitt durch eine erfindungsgemäße Kurbelwelle,
- Fig. 2: einen schematischen Schnitt durch die Kurbelwelle aus Fig. 1 (entlang der Linie A-A) mit einer ersten Ausführungsform des eingegossenen Ölkanales,
- Fig. 3: einen schematischen Schnitt entsprechend Fig. 2 in Rohguss-Stadium der Kurbelwelle,
- Fig. 4: eine Kerneinheit zur Herstellung einer Kurbelwelle nach Fig. 1 bis 3,
- Fig. 5: einen anderen Schnitt durch eine Fig. 4 entsprechende Kerneinheit,
- Fig. 6: eine zweite erfindungsgemäße Kurbelwelle im Rohguss-Stadium mit einer zweiten Ausführungsform des eingegossenen Ölkanales und
- Fig. 7: eine weitere Kerneinheit mit einer dritten Ausführungsform eines Ölkanales.

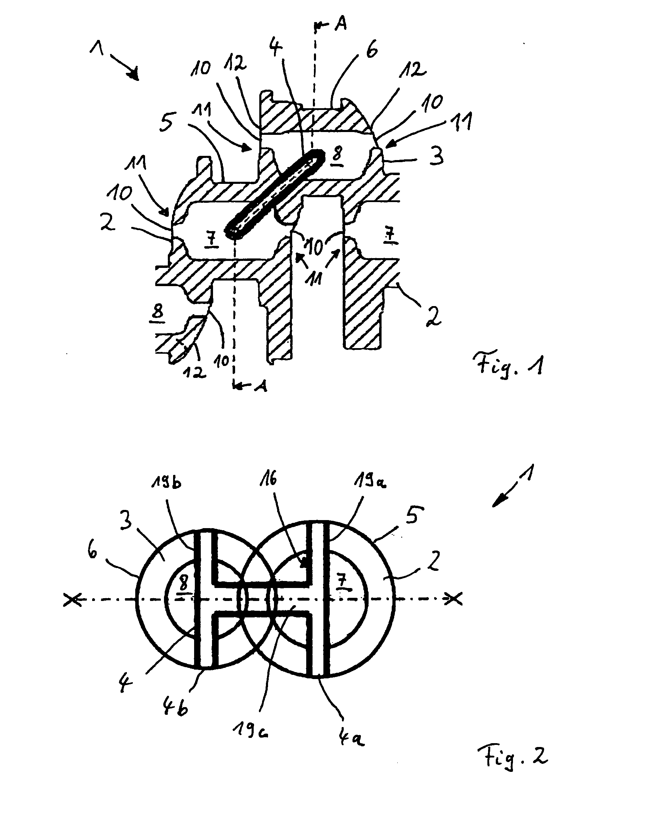

In den Fig. 1 bis 3 ist eine erste Ausführungsform einer erfindungsgemäßen gegossenen hohlen Kurbelwelle ausschnittsweise dargestellt. Die nicht dargestellten Abschnitte der Kurbelwelle entsprechen im wesentlichen dem nachfolgend beschriebenen Ausschnitt. Die Kurbelwelle 1 ist in einem Gießverfahren mit verlorenen Formen und Dauermodell, bei welchem feste Gießkerne in einer geteilten Außenform gelagert sind, hergestellt. In den Figuren ist ein Kurbelwellen-Lagerzapfen 2 für die Lagerung der Kurbelwelle 1 in einem Wellenlager, ein Pleuel-Lagerzapfen 3 für die Lagerung einer Pleuelstange in einem Pleuellager und ein als Rohr eingegossener Ölkanal 4, der vom Außenumfang 5 eines Kurbelwellen-Lagerzapfens 2 zum Außenumfang 6 eines Pleuel-Lagerzapfens 3 verläuft und der Lagerschmierung dient, zu erkennen. In den Kurbelwellen-Lagerzapfen 2 und den Pleuel-Lagerzapfen 3 sind jeweils Hohlräume 7, 8 ausgebildet.

Der Ölkanal 4 weist eine derartige Ausbildung und Anordnung auf, dass ein erstes Ende 4a am Kurbelwellen-Lagerzapfen 2 und ein zweites Ende 4b am Pleuel-Lagerzapfen 3 jeweils an derselben Kurbelwellenseite austreten. Dieser Verlauf ist durch die erfindungsgemäße Funktion des Ölkanales 4 bedingt. Er dient zum einen als Schmiermittelleitung zwischen Kurbelwellen-Lagerzapfen 2 und Pleuel-Lagerzapfen 3 und zum anderen zur Lagerung der für die Hohlraumausbildung in dem Kurbelwellen-Lagerzapfen 2 und Pleuel-Lagerzapfen 3 benötigten Gießkerne 7a, 8a während der Herstellung der Kurbelwelle 1. Dabei ist aus Fig. 1 ersichtlich, dass die Öffnung des Ölkanales 4 am Pleuel-Lagerzapfen 3 vorteilhaft nicht an der Stelle angeordnet ist, die von der gelagerten Pleuelstange beim Zylinderzündschlag getroffen wird, so dass die Ölführung beim Zündschlag geöffnet ist und der Ölfilm am Pleuellager nicht abreißt.

Ferner ist in Fig. 1 zu erkennen, dass in der Außenkontur der Kurbelwelle 1 in Bereichen außerhalb der Lagerflächen von Kurbelwellen-Lagerzapfen 2 und Pleuel-Lagerzapfen 3 pro Hohlraum 7, 8 mindestens eine kleindimensionierte Entkernungsöffnung 10 vorgesehen ist und dass die Kurbelwelle 1 ansonsten eine geschlossene Außenkontur aufweist. Hier sind pro Lagerzapfen vorteilhaft zwei Entkernungsöffnungen 10, und zwar auf jeder Lagerzapfen-Stirnseite 11 jeweils eine Entkernungsöffnung 10, vorgesehen. Die Entkernungsöffnungen 10 gehen nicht darauf zurück, dass zur Hohlraumausbildung benötigte Gießkerne an diesen Stellen in der Außenform gelagert worden sind. Sie sind nötig, um das Kernmaterial der verwendeten Gießkerne 7a, 8a nach dem Gießen aus den Hohlräumen 7, 8 entfernen zu können. Deswegen können sie entsprechend klein ausgebildet sein.

Die Entkernungsöffnungen 10 für den Hohlraum 8 eines Pleuel-Lagerzapfens 3 sind hier vorteilhaft jeweils im Bereich einer Pleuellagerschulter 12 angeordnet. Welche Stelle für das Vorsehen einer Öffnung besonders günstig ist, lässt sich für eine konkrete Kurbelwelle jeweils durch FE-Berechnungen (Berechnungen nach der Finite Elemente Methode) ermitteln. Es kann beispielsweise für die mechanische Stabilität einer Kurbelwelle 1 günstig sein, die Entkernungsöffnungen 10 in den Pleuellagerschultern 12 nicht auf Achsmitte des Pleuellagers anzuordnen, was in Fig. 1 angedeutet ist.

Für den Hohlraum 7 eines Kurbelwellen-Lagerzapfens 2 sind die Entkernungsöffnungen 10 in dieser Ausführung vorteilhaft jeweils im Bereich der Achsmitte des Kurbelwellenlagers angeordnet.

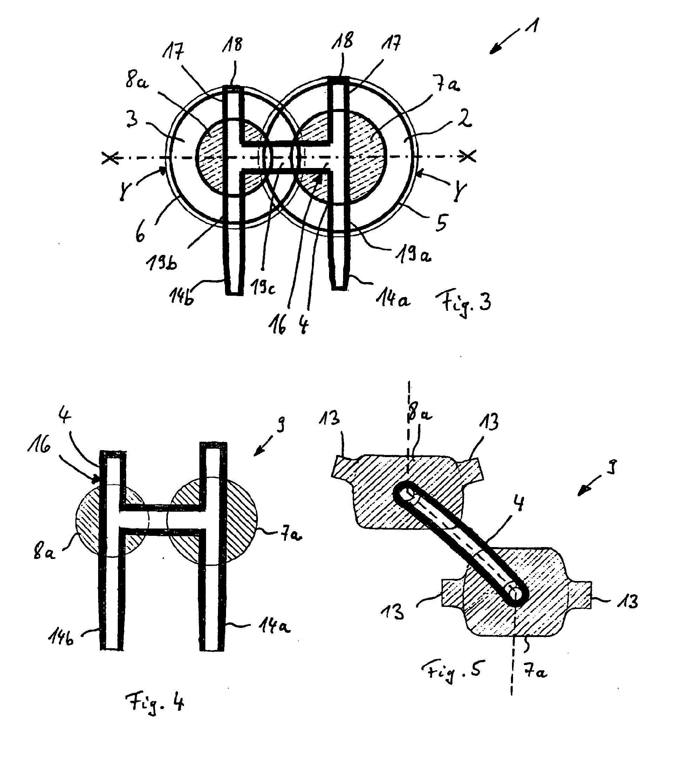

Die Entkernungsöffnungen 10 können nach dem Gießen mechanisch in die Kurbelwelle 1 eingebracht sein. In diesem Ausführungsbeispiel sind sie bereits beim Gießen mit ausgebildet worden, indem die zur Hohlraumbildung jeweils benötigten Gießkerne 7a, 8a an entsprechenden Stellen mit kleindimensionierten Kernfortsätzen 13 versehen gewesen sind (entsprechend den in Fig. 5 zu erkennenden Gießkernen). Fig. 5 zeigt auch, dass die Kerne 7a, 8a hier nur über den Ölkanal 4 eine Verbindung miteinander haben.

Das Herstellungsprinzip einer solchen erfindungsgemäßen gegossenen Kurbelwelle 1 wird aus einer Zusammenschau der Figuren 3 und 4 deutlich. Die Hohlräume 7, 8 in den Kurbelwellen-Lagerzapfen 2 und Pleuel-Lagerzapfen 3 werden dadurch erzeugt bzw. sind dadurch erzeugt worden, dass aus einem Gießkern 7a zur Bildung des Hohlraumes 7 in dem Kurbelwellen-Lagerzapfen 2 und einem Gießkern 8a zur Bildung des Hohlraumes 8 in dem Pleuel-Lagerzapfen 3 durch den in beide Kerne 7a, 8a als Rohr integrierten Ölkanal 4 eine Kerneinheit 9 gebildet wurde, die in einer Außenformhälfte gelagert worden ist. Dabei zeigt Fig. 4 eine Kerneinheit 9 vor dem Einbau in eine Außenformhälfte; sie umfasst die zwei Gießkerne 7a und 8a sowie den darin integrierten Ölkanal 4. Zur Herstellung mancher Kurbelwellen ist es im Rahmen der Erfindung auch möglich, mehr als zwei Gießkerne für die Freisparung von mehr als zwei Lagern zu einer Kerneinheit zu verbinden, indem mehrere entsprechend ausgebildete und angeordnete Ölkanäle in die Kerneinheit integriert sind.

Fig. 3 zeigt die gegossene Kurbelwelle im Rohguss-Stadium. Die Linie X-X deutet die Lage der Teilungsebene der verwendeten Außenform an. Die Kreise Y markieren die Bearbeitungszugabe an dem Kurbelwellen-Lagerzapfen 2 und dem Pleuel-Lagerzapfen 3 des gegossenen Rohteils.

In Fig. 3 und 4 ist zu erkennen, dass der in die Kerne 7a, 8a integrierte Ölkanal 4 derart verlängert ausgebildet wurde, dass zwei seiner Enden jeweils über den Außenumfang der zu gießenden Lager hinausragen und Lagerungsenden 14 bilden, und der Ölkanal 4 derart geformt wurde, dass das erste Lagerungsende 14a am Kurbelwellen-Lagerzapfen 2 und das zweite Lagerungsende 14b am Pleuel-Lagerzapfen 3 jeweils auf derselben Seite der Kurbelwelle 1 liegen. Die Lagerungsenden 14a, 14b sind hier senkrecht zur Teilungsebene X-X der verwendeten Außenform orientiert. In den Bereichen der gegossenen Lager und in den Hohlräumen 7, 8 kann der Verlauf des Ölkanales 4 dagegen beliebig sein, d.h. er muss dort nicht senkrecht zur Teilungsebene X-X verlaufen.

Die Lagerungsenden 14a, 14b dienen der Lagerung der Kerneinheit 9 in einer Außenformhälfte, wozu die Kerneinheit 9 mit ihren Lagerungsenden 14a, 14b in Ausnehmungen, die in der betreffenden Außenformhälfte an entsprechenden Stellen vorgesehen sind, eingesetzt wird. In Abhängigkeit von der Pleuellageranzahl, d.h. der Zylinderraumanzahl des Motors, werden entsprechend viele Kerneinheiten 9 vorgesehen (je Zylinderraum eine Kerneinheit), die jeweils mit ihren Lagerungsenden 14a, 14b in die Außenform eingesetzt werden. Fig. 3 und 4 zeigen, dass die Lagerungsenden 14a, 14b in ihren unteren Bereichen vorteilhaft mit geringem Winkel (bevorzugt mit einem Winkel von 1 bis 3°) konisch ausgebildet sind, wodurch eine spielfreie, formschlüssige Lagerung in der Außenform möglich ist.

Nach Fertigstellung der kompletten Gießform wurde die Kurbelwelle 1 mit dem jeweils verwendeten Gießverfahren gegossen und die Hohlräume 7, 8 über die kleindimensionierten Entkernungsöffnungen 10 vom Kernmaterial befreit. An dem Rohgussteil wurden ferner die Lagerungsenden 14a, 14b des Ölkanales 4 und z.B. die Bearbeitungszugaben Y an den Lagerzapfen entfernt (vgl. Fig. 2 und 3).

In den Figuren 2 bis 4, 6 und 7 sind unterschiedliche erfindungsgemäße Ausbildungen eines Ölkanales 4 für die Bildung unterschiedlicher Auführungsformen erfindungsgemäßer Kurbelwellen 1 dargestellt.

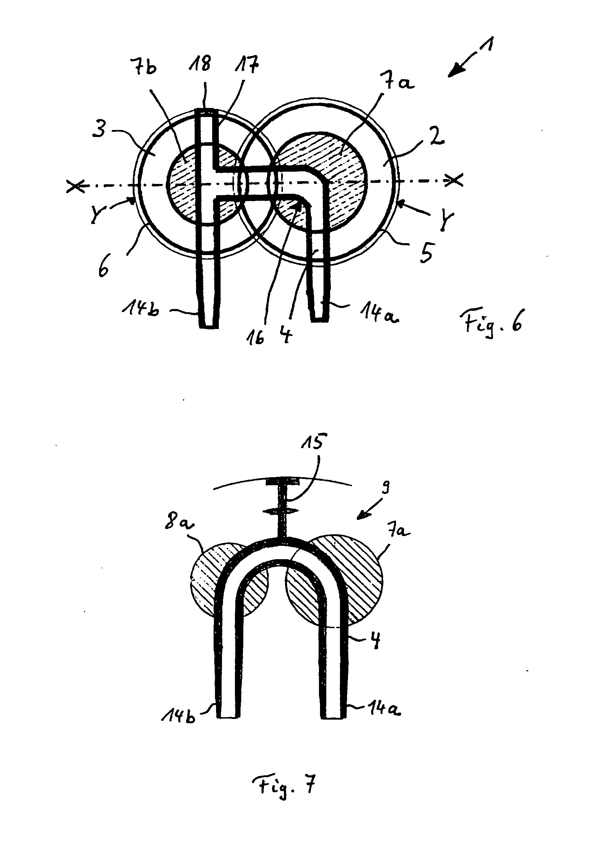

Fig. 7 zeigt einen als einfaches Rohr ausgebildeten, in die Kerne 7a, 8a integrierten Ölkanal 4, der einen U-förmigen Verlauf aufweist. Dabei ist ein Lagerungsende 14a am zu gießenden Kurbelwellen-Lagerzapfen 2 und ein Lagerungsende 14b am zu gießenden Pleuel-Lagerzapfen 3 angeordnet jeweils auf derselben Seite der Kurbelwelle 1. Mit einem derartig ausgebildeten Ölkanal 4 kann die Kerneinheit 9 genau positioniert und verdrehsicher in der ersten Außenformhälfte gelagert werden. Um ein Aufschwimmen der Kerneinheit 9 während des Gießens durch die Auftriebskräfte der heißen Schmelze zu unterbinden, ist eine Stütze 15 zum Abstützen an der zweiten Außenformhälfte erforderlich. Eine mit einer derartigen Kerneinheit hergestellte Kurbelwelle stellt eine weitere erfindungsgemäße Ausführungsform dar.

Fig. 6 zeigt ein weiteres vorteilhaftes Ausführungsbeispiel einer erfindungsgemäßen Kurbelwelle 1 im Rohguss-Stadium, und zwar ist der in die Kerne 7a, 8a integrierte Ölkanal 4 als eingegossenes Rohrsystem 16 ausgebildet, indem mehrere Rohre miteinander verbunden wurden. Dabei weist das Rohrsystem 16 zwei auf einer Seite der Kurbelwelle 1 angeordnete Lagerungsenden 14a, 14b zum Lagern der Kerneinheit 9 in der ersten Außenformhälfte und auf der gegenüberliegenden Seite der Kurbelwelle 1 mindestens ein Abstützungsende 17 zum Abstützen der Kerneinheit 9 an der Innenseite der zweiten Außenformhälfte auf. Die Stirnseite des Abstützungsende 17 ist vor dem Gießen verschlossen worden, um die Auflagefläche zu vergrößern und um das Eindringen von Schmelze zu verhindern. Die Länge des Abstützungsendes 17 ist derart bemessen, dass die verschlossene Stirnseite nach Zusammenbau der Gießform an der zweiten Außenformhälfte anliegt. Zu erkennen ist, dass die Dicke des Verschlusses 18 hier vorteilhaft derart bemessen ist, dass er beim Entfernen der Bearbeitungszugabe Y am Lager mit entfernt wird. Das Abstützungsende 17 unterbindet ein Aufschwimmen der Kerneinheit 9 während des Gießens, wodurch eine gesonderte Stütze entbehrlich wird.

Das hier dargestellte eingegossene Rohrsystems 16 ist h-förmig ausgebildet. Dabei ist das Rohrsystem 16 hier derart angeordnet, dass am Außenumfang 5 des Kurbelwellen-Lagerzapfens 2 eine Ölaufnahme-Öffnung (Ölaufnahme) liegt. Das dort aufgenommene, durch das Rohrsystem 16 weitergeleitete Öl wird am Außenumfang 6 des Pleuel-Lagerzapfens 3 über zwei Ölabgabe-Öffnungen (Ölabgabe) abgegeben. Selbstverständlich kann das Rohrsystem 16 auch anders herum eingegossen sein, so dass der Kurbelwellen-Lagerzapfen 2 zwei Ölaufnahmen und der Pleuel-Lagerzapfen 3 eine Ölabgabe aufweisen. Selbstverständlich kann die Anzahl der Abstützungsenden 17 im Bereich eines Lagerzapfens auch zwei oder mehr betragen, indem sich das Abstützungsende 17 beispielsweise (mehrfach) verzweigt. Desweiteren kann auch ein Rohrsystem 16 mit drei Abschnitten beispielsweise in y-förmiger Anordnung eingegossen sein. Weitere Alternativen sind möglich.

Die Fig. 2 bis 4 zeigen ein weiteres vorteilhaftes Ausführungsbeispiel einer erfindungsgemäßen Kurbelwelle 1 bzw. eines erfindungsgemäßen Ölkanales 4, und zwar ist hier ein Rohrsystem 16 mit zwei Lagerungsenden 14 und zwei Abstützungsenden 17 in H-förmiger Anordnung eingegossen worden. Das hier eingegossene Rohrsystem 16 weist einen quer durch den Kurbelwellen-Lagerzapfen 2 verlaufenden Rohrabschnitt 19a und einen quer durch den Pleuel-Lagerzapfen 3 verlaufenden Rohrabschnitt 19b auf, die durch einen Mittelrohrabschnitt 19c, welcher in Bezug auf die Teilungsebene X-X der verwendeten Außenform parallel verläuft, verbunden sind. Dabei entsprechen die Ausbildung, Anordnung und Funktion der Abstützungsenden 17 der Abstützung, die im Zusammenhang mit Fig. 6 beschrieben wurde. Ein derart ausgebildeter, in die Gießkerne 7a, 8a integrierter Ölkanal 4 bietet eine besonders sichere Lagerung und Abstützung der Kerneinheit 9 während der Herstellung der erfindungsgemäßen Kurbelwelle 1.

Das gezeigte eingegossene Rohrsystem 16 hat am Kurbelwellen-Lagerzapfen 2 zwei Ölaufnahmen und am Pleuel-Lagerzapfen 3 zwei Ölabgaben und ist besonders gut für hochtourig laufende Motoren geeignet, um die erforderliche Schmiermittelzufuhr zu den Pleuellagern zu gewährleisten. Um einen größeren Öldurchfluss zu ermöglichen, weist der Mittelrohrabschnitt 19c einen größeren Durchmesser auf als die Rohrabschnitte 19a und 19b.

In Abwandlung zu dem gezeigten H-förmigen Rohrsystem 16 könnte der Verlauf des Mittelrohrabschnittes 19c auch schräg zur Teilungsebene X-X sein. Auch ein K-förmiges Rohrsystem 16 ist realisierbar. Ferner könnten die Abschnitte des Rohrsystems 16 im Inneren der Lager auch derart schräg angeordnet sein, dass sie nicht durch die Mittelpunkte der Hohlräume 7, 8 verlaufen, oder ein Abschnitt oder mehrere Abschnitte könnten einen gebogenen Verlauf aufweisen in Abhängigkeit von den jeweiligen konstruktiven Gegebenheiten. Darüber hinaus könnten je Lagerzapfen auch mehr als zwei Abstützungsenden 17 vorgesehen sein durch eine Gabelung des entsprechenden Rohrabschnittes, wodurch sich die Anzahl der Ölaufnahmen bzw. Ölabgaben erhöhen lässt.

Generell ist eine Lagerung der Kerneinheit 9 in einer einzigen Außenformhälfte bevorzugt. Machbar ist - jedoch mit wesentlich größerem Aufwand - auch eine Lagerung der Kerneinheit 9 in beiden Außenformhälften, d.h. eine zusätzliche Lagerung der Kerneinheit 9 auch in der gegenüberliegenden Außenformhälfte. Hierfür wäre an dem betreffenden Ölkanal anstelle eines Abstützungsendes ein zusätzliches, über den Außenumfang des zu gießenden Lagers hinaus verlängertes Lagerungsende vorzusehen.

Durch die erfindungsgemäße Lagerung der Gießkerne 7a, 8a über einen Ölkanal 4, wodurch großdimensionierte Kernlagerungsöffnungen in der Außenkontur der Kurbelwelle 1 vermieden werden, ist es möglich, die für den Maschinenbetrieb erforderliche mechanische Stabilität der Kurbelwelle 1 auch ohne Zusatzmaßnahmen, wie sie aus dem Stand der Technik bekannt sind, zu erzielen. Falls es gewünscht oder im Einzelfall doch erforderlich sein sollte, besteht auch die vorteilhafte Möglichkeit, in mindestens einem Hohlraum 7, 8 ein Versteifungselement oder mehrere Versteifungselemente (Rippen, Wände, Querverstrebungen etc.) vorzusehen, wobei diese durch entsprechend ausgebildete Kernarrangements direkt beim Gießen der Kurbelwelle mit gegossen sind.

### Bezugszeichenliste

- 1: Kurbelwelle
- 2: Kurbelwellen-Lagerzapfen
- 3: Pleuel-Lagerzapfen
- 4: Ölkanal
- 4a: Ende von 4
- 4b: Ende von 4
- 5: Außenumfang von 2
- 6: Außenumfang von 3
- 7: Hohlraum von 2
- 7a: Gießkern von 7
- 8: Hohlraum von 3
- 8a: Gießkern von 8
- 9: Kerneinheit
- 10: Entkernungsöffnung
- 11: Stirnseite
- 12: Pleuel-Lagerschulter
- 13: Kernfortsatz
- 14: Lagerungsende
- 14a: Lagerungsende
- 14b: Lagerungsende
- 15: Stütze
- 16: Rohrsystem
- 17: Abstützungsende
- 18: Verschluss
- 19a: Rohrabschnitt
- 19b: Rohrabschnitt
- 19c: Rohrabschnitt
- X-X: Teilungsebene
- Y: Bearbeitungszugabe

## Patentansprüche

1. Gegossene hohle Kurbelwelle mit Kurbelwellen-Lagerzapfen (2), Pleuel-Lagerzapfen (3) und als Rohre eingegossenen Ölkanälen (4), die jeweils vom Außenumfang (5) eines Kurbelwellen-Lagerzapfens (2) zum Außenumfang (6) eines Pleuel-Lagerzapfens (3) verlaufen und der Lagerschmierung dienen, wobei die Kurbelwelle (1) in einem Gießverfahren mit verlorenen Formen und Dauermodell, bei welchem zur Ausbildung von Hohlräumen (7, 8) in den Kurbelwellen-Lagerzapfen (2) und Pleuel-Lagerzapfen (3) feste Gießkerne (7a, 8a) in einer geteilten Außenform gelagert sind, hergestellt ist,
**dadurch gekennzeichnet,**
**dass** die Hohlräume (7, 8) in einem Kurbelwellen-Lagerzapfen (2) und einem Pleuel-Lagerzapfen (3) **dadurch** erzeugt sind, dass ein Gießkern (7a) zur Bildung des Hohlraumes (7) in dem Kurbelwellen-Lagerzapfen (2) und ein Gießkern (8a) zur Bildung des Hohlraumes (8) in dem Pleuel-Lagerzapfen (2)über einen in Form eines Rohres in beide Kerne (7a, 8a) integrierten Ölkanal (4) als Kerneinheit (9) in einer Außenformhälfte gelagert worden sind, wofür der Ölkanal (4) einen derartigen Verlauf aufweist, dass ein Ende (4a) am Kurbelwellen-Lagerzapfen (2) und ein Ende (4b) am Pleuel-Lagerzapfen (3) jeweils an derselben Kurbelwellenseite austreten,
**dass** in der Außenkontur der Kurbelwelle (1) in Bereichen außerhalb der Lagerflächen von Kurbelwellen-Lagerzapfen (2) und Pleuel-Lagerzapfen (3) pro Gießkern (7a, 8a) mindestens eine kleindimensionierte Entkernungsöffnung (10) vorgesehen ist zum Entfernen des Kernmateriales aus den Hohlräumen (7, 8) nach dem Gießen und
**dass** die Kurbelwelle (1) ansonsten eine im wesentlichen geschlossene Außenkontur aufweist.

2. Gegossene hohle Kurbelwelle nach Anspruch 1,
**dadurch gekennzeichnet,**
**dass** die mindestens eine Entkernungsöffnung (10) für einen Pleuel-Lagerzapfen (3) im Bereich einer Pleuellagerschulter (12) angeordnet ist.

3. Gegossene hohle Kurbelwelle nach Anspruch 1 oder 2,
**dadurch gekennzeichnet,**
**dass** die mindestens eine Entkernungsöffnung (10) für einen Kurbelwellen-Lagerzapfen (2) im Bereich der Achsmitte des Kurbelwellenlagers angeordnet ist.

4. Gegossene hohle Kurbelwelle nach einem der vorhergehenden Ansprüche,
**dadurch gekennzeichnet,**
**dass** der Durchmesser der Entkernungsöffnungen (10) für eine PKW-Kurbelwelle 5 bis 12 mm, vorzugsweise 6 bis 8 mm beträgt.

5. Gegossene hohle Kurbelwelle nach einem der Ansprüche 1 bis 3,
**dadurch gekennzeichnet,**
**dass** der Durchmesser der Entkernungsöffnungen (10) für eine Nutzfahrzeug-Kurbelwelle 12 bis 25 mm, vorzugsweise 15 bis 20 mm beträgt.

6. Gegossene hohle Kurbelwelle nach einem der vorhergehenden Ansprüche,
**dadurch gekennzeichnet,**
**dass** ein Ölkanal (4) als eingegossenes Rohrsystem (16) ausgebildet ist.

7. Gegossene hohle Kurbelwelle nach Anspruch 6,
**dadurch gekennzeichnet,**
**dass** das eingegossene Rohrsystem (16) zwei auf einer Seite der Kurbelwelle (1) angeordnete Enden zur Lagerung der Kerneinheit (9) in einer ersten Außenformhälfte und auf einer gegenüberliegenden Lagerseite mindestens ein Abstützungsende (17) zum Abstützen der Kerneinheit (9) an der Innenseite einer zweiten Außenformhälfte aufweist.

8. Gegossene hohle Kurbelwelle nach Anspruch 6 oder 7,
**dadurch gekennzeichnet,**
**dass** das eingegossene Rohrsystem (16) einen quer durch den Kurbelwellen-Lagerzapfen (2) verlaufenden Rohrabschnitt (19a) und einen quer durch den Pleuel-Lagerzapfen (3) verlaufenden Rohrabschnitt (19b) aufweist, die durch einen Mittelrohrabschnitt (19c), welcher in Bezug auf die Teilungsebene (X-X) der verwendeten Außenform parallel oder schräg verläuft, verbunden sind.

9. Gegossene hohle Kurbelwelle nach einem der vorhergehenden Ansprüche,
**dadurch gekennzeichnet,**
**dass** in mindestens einem Hohlraum (7, 8) zur Erhöhung der mechanischen Belastbarkeit der Kurbelwelle (1) mindestens ein Versteifungselement vorgesehen ist.

10. Gegossene hohle Kurbelwelle nach einem der vorhergehenden Ansprüche,
**dadurch gekennzeichnet,**
**dass** die Kurbelwelle (1) in einem Gießverfahren mit zweigeteilter Außenform, insbesondere im Masken-Gießverfahren, Grünform-Gießverfahren oder Kaltharzform-Gießverfahren, hergestellt ist.

11. Gegossene hohle Kurbelwelle nach einem der Ansprüche 1 bis 9,
**dadurch gekennzeichnet,**
**dass** die Kurbelwelle im Kernblockgießverfahren mit längs und quer geteilter Außenform hergestellt ist.

12. Gegossene hohle Kurbelwelle nach einem der vorhergehenden Ansprüche,
**dadurch gekennzeichnet,**
**dass** ein Ölkanal (4) an dem Außenumfang (6) eines Pleuel-Lagerzapfens (3) und/oder an dem Außenumfang (5) eines Kurbelwellen-Lagerzapfens (2) einen länglichen Querschnitt aufweist.

13. Verfahren zur Herstellung einer in einem Gießverfahren mit verlorenen Formen und Dauermodell hohlgegossenen Kurbelwelle (1), wobei die Kurbelwelle Kurbelwellen-Lagerzapfen (2) und Pleuel-Lagerzapfen (3), in denen jeweils ein Hohlraum (7, 8) freigespart ist, und als Rohre eingegossene Ölkanäle (4) aufweist, die jeweils vom Außenumfang (5) eines Kurbelwellen-Lagerzapfens (2) zum Außenumfang (6) eines Pleuel-Lagerzapfens (3) verlaufen und der Lagerschmierung dienen,
**dadurch gekennzeichnet,**
**dass** für die Ausbildung der Hohlräume (7, 8) in einem Kurbelwellen-Lagerzapfen (2) und einem Pleuel-Lagerzapfen (3) eine Kerneinheit (9) gebildet wird, die einen Gießkern (7a) für die Ausbildung des Hohlraumes (7) in dem Kurbelwellen-Lagerzapfen (2), einen Gießkern (8a) für die Ausbildung des Hohlraumes (8) in dem benachbarten Pleuel-Lagerzapfen (3) und ein darin integriertes vorgeformtes Rohr als späteren Ölkanal (4) umfasst,
wobei der integrierte Ölkanal (4) derart verlängert ausgebildet wurde, dass seine Enden jeweils über den Außenumfang (5, 6) der zu gießenden Lager hinausragen und Lagerungsenden (14) bilden, und der Ölkanal (4) derart geformt wurde, dass das erste Lagerungsende (14a) am Kurbelwellen-Lagerzapfen (2) und das zweite Lagerungende (14b) am Pleuel-Lagerzapfen (3) jeweils auf derselben Seite der Kurbelwelle (1) liegen und die Lagerungsenden (14a, 14b) beim Einsetzen der Kerneinheit (9) in die Außenform im wesentlichen senkrecht zur Teilungsebene (X-X) der verwendeten Außenform orientiert sind,
**dass** die Kerneinheit (9) mit den Lagerungsenden (14a, 14b) in Ausnehmungen, die in einer Außenformhälfte an entsprechenden Stellen vorgesehen sind, eingesetzt wird, und dass je Zylinderraum eine Kerneinheit (9) vorgesehen und in die Außenform eingesetzt wird,
**dass** die Kurbelwelle (1) nach Fertigstellung der kompletten Gießform mit dem jeweils verwendeten Gießverfahren gegossen wird,
**dass** die Gießkerne (7a, 8a) über in Bereichen außerhalb der Lagerflächen von Kurbelwellen-Lagerzapfen (2) und Pleuel-Lagerzapfen (3) ausgebildete bzw. eingebrachte kleindimensionierte Entkernungsöffnungen (10) aus den Hohlräumen (7, 8) entfernt werden und die Lagerungsenden (14a, 14b) des Ölkanales (4) im Zuge von Bearbeitungsmaßnahmen entfernt werden.

14. Verfahren nach Anspruch 13,
**dadurch gekennzeichnet,**
**dass** die Kurbelwelle (1) in einem Gießverfahren mit zweigeteilter Außenform, insbesondere im Masken-Gießverfahren, Grünform-Gießverfahren oder Kaltharzform-Gießverfahren, hergestellt wird.

15. Verfahren nach Anspruch 13,
**dadurch gekennzeichnet,**
**dass** die Kurbelwelle (1) im Kernblock-Gießverfahren hergestellt wird, bei welchem in Kernblockeinheiten, die durch eine Teilung der Außenform quer zur Kurbelwellenlängserstreckung gebildet worden sind und die wiederum jeweils längs zur Kurbelwellenlängserstreckung in zwei Hälften geteilt worden sind, Kerneinheiten (9) zur Hohlraumformgebung eingebaut werden, wobei die Kerneinheiten (9) über die Lagerungsenden (14) der Ölkanäle (4) jeweils im Bereich eines Kurbelwellen-Lagerzapfens (2) und eines Pleuel-Lagerzapfens (3) in einer Hälfte einer Kernblockeinheit gelagert werden, die Kernblockeinheiten zur kompletten Blockform zusammengesetzt werden und
die Kurbelwelle (1) anschließend gegossen wird.

16. Verfahren nach einem der Ansprüche 13 bis 15,
**dadurch gekennzeichnet,**
**dass** für die Bildung eines Ölkanales (4) mehrere Rohre zu einem Rohrsystem (16) verbunden worden sind, wobei das Rohrsystem (16) zwei Lagerungsenden (14) zum Lagern der Kerneinheit (9) in einer ersten Außenformhälfte und mindestens ein während des Gießens verschlossenes Abstützungsende (17) aufweist, dessen Länge derart gewählt wird, dass die verschlossene Stirnseite des Abstützungsendes (17) nach Zusammenbau der Gießform an einer zweiten Außenformhälfte anliegt.

17. Verfahren nach Anspruch 16,
**dadurch gekennzeichnet,**
**dass** ein H-förmig ausgebildetes Rohrsystem mit zwei Lagerungsenden (14) und mindestens zwei Abstützungsenden (17) eingegossen wird.

18. Verfahren nach einem der Ansprüche 13 bis 17,
**dadurch gekennzeichnet,**
**dass** die Lagerungsenden (14) des Ölkanales (4) zur spielfreien Lagerung in geringem Winkel konisch ausgebildet sind.

19. Verfahren nach einem der Ansprüche 13 bis 18,
**dadurch gekennzeichnet,**
**dass** zur Hohlraumfreisparung in den Kurbelwellen-Lagerzapfen (2) und Pleuel-Lagerzapfen (3) Gießkerne (7a, 8a) verwendet werden, die jeweils mindestens einen Fortsatz (13) zur Ausbildung einer kleindimensionierten Entkernungsöffnung (10) in der Außenkontur der gegossenen Kurbelwelle (1) aufweisen.

## Claims

1. A cast hollow crankshaft comprising crankshaft journals (2), connecting-rod journals (3) and oil ducts (4) cast in as pipes, each running from the outer circumference (5) of a crankshaft journal (2) to the outer circumference (6) of a connecting-rod journal (3) and serving to lubricate bearings, wherein the crankshaft (1) is manufactured in a casting method with lost moulds and a permanent pattern in which solid casting cores (7a, 8a) are mounted in a split outer mould to form cavities (7, 8) in the crankshaft journals (2) and connecting-rod journals (3)
**characterised in**
**that** the cavities (7, 8) in a crankshaft journal (2) and a connecting-rod journal (3) are produced by having mounted a casting core (7a) for forming the cavity (7) in the crankshaft journal (2) and a casting core (8a) for forming the cavity (8) in the connecting-rod journal (3) by means of an oil duct (4) integrated in the form of a pipe in both cores (7a, 8) as a core unit (9) in an outer mould half, for which the oil duct (4) has such a course that one end (4a) at the crankshaft journal (2) and one end (4b) at the connecting-rod journal (3) each emerge on the same crankshaft side,
**that** in the outer contour of the crankshaft (1) in areas outside the bearing surfaces of the crankshaft journal (2) and connecting-rod journal (3) there is provided per casting core (7a,8a) at least one small-dimensioned core-removal opening (10) for removing the core material from the cavities (7, 8) after casting and
**that** the crankshaft (1) otherwise has a substantially closed outer contour.

2. The cast hollow crankshaft according to claim 1,
**characterised in**
**that** the at least one core-removal opening (10) for a connecting-rod journal (3) is located in Lhe area of a connecting-rod bearing shoulder (12).

3. The cast hollow crankshaft according to claim 1 or 2,
**characterised in**
**that** the at least one core-removal opening (10) for a crankshaft journal (2) is located in the area of the centreline of the crankshaft bearing.

4. The cast hollow crankshaft according to one of the preceding claims
**characterised in**
**that** the diameter of the core-removal openings (10) for a passenger car crankshaft is 5 to 12 mm, preferably 6 to 8 mm.

5. The cast hollow crankshaft according to one of claims 1 to 3,
**characterised in**
**that** the diameter of the core-removal openings (10) for a commercial vehicle crankshaft is 12 to 25 mm, preferably 15 to 20 mm.

6. The cast hollow crankshaft according to one of the preceding claims
**characterised in**
**that** an oil duct (4) is configured as a cast-in pipe system (16).

7. The cast hollow crankshaft according to claim 6,
**characterised in**
**that** the cast-in pipe system (16) comprises two ends arranged on one side of the crankshaft (1) for mounting the core unit (9) in a first outer mould half and and at least one support end (17) on an opposite bearing side for supporting the core unit (9) on the inner side of a second outer mould half.

8. The cast hollow crankshaft according to claim 6 or 7,
**characterised in**
**that** the cast-in pipe system (16) comprises a pipe section (19a) running transversely through the crankshaft journal (2) and a pipe section (19b) running transversely through the connecting-rod journal (3) which are connected by a central pipe section (19c) which runs parallel or obliquely to the plane of joint (X-X) of the outer mould used.

9. The cast hollow crankshaft according to one of the preceding claims
**characterised in**
**that** at least one stiffening clement is provided in at least one cavity (7, 8) for increasing the mechanical loading capacity of the crankshaft (1).

10. The cast hollow crankshaft according to one of the preceding claims
**characterised in**
**that** the crankshaft (1) is produced in a casting process using a bipartite outer mould, in particular in the mask casting process, green-sand mould casting process or cold resin mould casting process.

11. The cast hollow crankshaft according to one of claims 1 to 9,
**characterised in**
**that** the crankshaft is produced in a core block casting process using a longitudinally and transversely split outer mould.

12. The cast hollow crankshaft according to one of the preceding claims
**characterised in**
**that** an oil duct (4) on the outer circumference (6) of a connecting-rod journal (3) and/or on the outer circumference (5) of a crankshaft journal (2) has an elongated cross-section.

13. A method for producing a cast hollow crankshaft (1) in a casting method with lost moulds and a permanent pattern, wherein the crankshaft comprises crankshaft journals (2) and connecting-rod journals (3) in which a cavity (7, 8) is left free in each case and oil ducts (4) cast in as pipes, each running from the outer circumference (5) of a crankshaft journal (2) to the outer circumference (6) of a connecting-rod journal (3) and serving to lubricate bearings,
**characterised in**
**that** for forming the cavities (7, 8) in a crankshaft journal (2) and a connecting-rod journal (3), there is formed a core unit (9) comprising a casting core (7a) for forming the cavity (7) in the crankshaft journal (2), a casting core (8a) for forming the cavity (8) in the adjacent connecting-rod journal (3) and a pre-formed pipe integrated therein as a subsequent oil duct (4),
wherein the integrated oil duct (4) is configured as extended in such a manner that its ends each project beyond the outer circumference (5, 6) of the bearings to be cast and form mounting ends (14) and the oil duct (4) is formed in such a manner that the first mounting end (14a) at the crankshaft journal (2) and the second mounting end (14b) at the connecting-rod journal (3) each lie on the same side of the crankshaft (1) and on insertion of the core unit (9) into the outer mould, the mounting ends (14a, 14b) are oriented substantially perpendicularly to the plane of joint (X-X) of the outer mould used,
**that** the core unit (9) with the mounting ends (14a, 14b) is inserted in recesses provided at corresponding points in an outer mould half, and that one core unit (9) is provided per cylinder chamber and inserted in the outer mould,
**that** after completion of the complete casting mould, the crankshaft (1) is cast by the casting method used in each case,
**that** the casting cores (7a, 8a) are removed from the cavities (7, 8) by means of small-dimensioned core-removal openings (10) configured or inserted in areas outside the bearing surfaces of the crankshaft journal (2) and connecting-rod journal (3) and the mounting ends (14a, 14b) of the oil duct (4) are removed in the course of processing measures.

14. The method according to claim 13,
**characterised in**
**that** the crankshaft (1) is produced in a casting process using a bipartite outer mould, in particular in the mask casting process, green-sand mould casting process or cold resin mould casting process.

15. The method according to claim 13,
**characterised in**
**that** the crankshaft (1) is produced in a core block casting process in which core units (9) for cavity forming are inserted in core block units which have been formed by dividing the outer mould transversely to the crankshaft longitudinal extension and which have in turn each been divided into two halves longitudinally to the crankshaft longitudinal extension, wherein the core units (9) are mounted by means of the mounting ends (14) of the oil ducts (4) each in the area of a crankshaft journal (2) and a connecting-rod journal (3) in one half of a core block unit, the core block units are combined to form the complete block mould and the crankshaft (1) is then cast.

16. The method according to one of claims 13 to 15,
**characterised in**
**that** a plurality of pipes have been connected to form a pipe system (16) to form an oil duct (4), wherein the pipe system (16) comprises two mounting ends (14) for mounting the core unit (9) in a first outer mould half and at least one support end (17) which is closed during casting, the length whereof is selected in such a manner that the closed front side of the support end (17) abuts against a second outer mould half after assembly of the casting mould.

17. The method according to claim 16,
**characterised in**
**that** a pipe system configured as H-shaped having two mounting ends (14) and at least two support ends (17) is cast in.

18. The method according to one of claims 13 to 17,
**characterised in**
**that** the mounting ends (14) of the oil duct (4) are configured as conical at a small angle for play-free mounting.

19. The method according to one of claims 13 to 18,
**characterised in**
**that** casting cores (7a, 8a) having at least one continuation (13) for forming a small-dimensioned core-removal opening (10) in the outer contour of the cast crankshaft (1) are used for leaving cavities in the crankshaft journal (2) and connecting-rod journal (3).

## Revendications

1. vilebrequin creux coulé, avec des tourillons de vilebrequin (2), des tourillons de bielle (3) et des canaux à huile coulés en tant que conduits, s'étendant chacun depuis le pourtour extérieur (5) d'un tourillon de vilebrequin (2) jusqu'au pourtour extérieur (6) d'un tourillon de bielle (3) et qui servant de lubrifiants de palier, le vilebrequin (1) étant fabriqué au cours d'un procédé de coulage avec moules perdus et modèle durable, dans lequel des noyaux de coulée solides (7a, 8a) sont disposés dans un moule externe divisé, pour la formation d'espaces creux (7, 8) dans les tourillons de vilebrequin (2) et dans les tourillons de bielle (3),
**caractérisé en ce que**
les espaces creux (7, 8) sont réalisés dans un tourillon de vilebrequin (2) et dans un tourillon de bielle (3), en installant un noyau de coulée (7a) destiné à la formation de l'espace creux (7) dans le tourillon de vilebrequin (2) et un noyau de coulée (8a) destiné à la formation de l'espace creux (8) dans le tourillon de bielle (3), en tant qu'unités de noyau (9) dans une moitié de moule externe, par le biais d'un canal à huile (4) intégré sous la forme d'un conduit dans chacun des deux noyaux (7a, 8a), le canal à huile (4) se développant de telle manière qu'une extrémité (4a) se termine sur le tourillon de vilebrequin (2) et une autre extrémité (4b) sur le tourillon de bielle (3), toutes deux du même côté du vilebrequin,
**en ce qu'**au moins une ouverture de dénoyautage (10) de petite taille est prévue pour chacun des noyaux de coulée (7a, 7b), dans le contour extérieur du vilebrequin (1), dans des régions à l'extérieur des surfaces d'appui des tourillons de vilebrequin (2) et des tourillons de bielle (3), en vue de l'évacuation du matériau de noyau dans les espaces creux (7, 8) après le coulage, et
**en ce que** le vilebrequin (1) présente par ailleurs un contour extérieur essentiellement fermé.

2. vilebrequin creux coulé selon la revendication 1,
**caractérisé en ce que**
l'au moins une ouverture de dénoyautage (10) pour un tourillon de bielle (3) est prévue dans la région de l'épaule du palier de bielle (12).

3. Vilebrequin creux coulé selon la revendication 1 ou 2,
**caractérisé en ce que**
l'au moins une ouverture de dénoyautage (10) pour un tourillon de vilebrequin (2) est prévue dans la région de l'axe médian du palier de vilebrequin.

4. Vilebrequin creux coulé selon l'une des revendications précédentes,
**caractérisé en ce que**
le diamètre de l'ouverture de dénoyautage (10) pour un vilebrequin de voiture particulière mesure entre 5 et 12 mm, de préférence entre 6 et 8 mm.

5. Vilebrequin creux coulé selon l'une des revendications 1 à 3,
**caractérisé en ce que**
le diamètre de l'ouverture de dénoyautage (10) pour un vilebrequin de véhicule utilitaire mesure entre 12 et 25 mm, de préférence entre 15 et 20 mm.

6. Vilebrequin creux coulé selon l'une des revendications précédentes,
**caractérisé en ce que**
le canal à huile (4) est réalisé sous forme de système de conduits coulés (16).

7. vilebrequin creux coulé selon la revendication 6,
**caractérisé en ce que**
le système de conduits coulés (16) comporte deux extrémités situées d'un côté du vilebrequin (1), pour l'installation de l'unité de noyau (9) dans une première moitié de moule extérieur, et au moins une extrémité d'appui (17) située sur un côté de palier opposé, pour l'appui de l'unité de noyau (9) contre la face intérieure d'une deuxième moitié de moule extérieur.

8. Vilebrequin creux coulé selon la revendication 6 ou 7,
**caractérisé en ce que**
le système de conduits coulés (16) comporte un tronçon de conduit (19a) s'étendant transversalement au tourillon de vilebrequin (2) et un tronçon de conduit (19b) s'étendant transversalement au tourillon de bielle (3), les tronçons étant reliés l'un à l'autre par un tronçon de conduit médian (19c) s'étendant parallèlement ou en oblique par rapport au plan de division (X-X) du moule extérieur utilisé.

9. Vilebrequin creux coulé selon l'une des revendications précédentes,
**caractérisé en ce que**
au moins un élément de renforcement est prévu dans au moins un espace creux (7, 8), pour l'augmentation de la capacité de charge mécanique du vilebrequin (1).

10. Vilebrequin creux coulé selon l'une des revendications précédentes,
**caractérisé en ce que**
le vilebrequin (1) est fabriqué au cours d'un procédé de coulage avec moule extérieur divisé en deux, en particulier au cours d'un procédé de coulage à masque, d'un procédé de coulage à moule à vert ou d'un procédé de coulage à moule de résine à froid.

11. Vilebrequin creux coulé selon l'une des revendications 1 à 9,
**caractérisé en ce que**
le vilebrequin est fabriqué au cours d'un procédé de coulage à bloc-noyau, avec un moule extérieur divisé de façon longitudinale et transversale.

12. Vilebrequin creux coulé selon l'une des revendications précédentes,
**caractérisé en ce que**
un canal à huile (4) présente une section transversale allongée sur le pourtour extérieur (6) d'un tourillon de bielle (3) et/ou sur le pourtour extérieur (5) d'un tourillon de vilebrequin (2).

13. Procédé destiné à la réalisation d'un vilebrequin (1) creux coulé à l'aide de moules perdus et d'un modèle durable, le vilebrequin comportant des tourillons de vilebrequin (2) et des tourillons de bielle (3), dans lesquels est dégagé un espace creux (7, 8), ainsi que des canaux à huile (4) coulés en tant que conduits, s'étendant respectivement depuis le pourtour extérieur (5) d'un tourillon de vilebrequin (2) jusqu'au pourtour extérieur (6) d'un tourillon de bielle (3), et servant de lubrifiant de palier,
**caractérisé en ce que**
une unité de noyau (9) est prévue pour la formation des espaces creux (7, 8) dans un tourillon de vilebrequin (2) et un tourillon de bielle (3), comprenant un noyau de coulée (7a) pour la formation de l'espace creux (7) dans le tourillon de vilebrequin (2), un noyau de coulée (8a) pour la formation de l'espace creux (8) dans le tourillon de bielle (3) adjacent, ainsi qu'un conduit préformé intégré, en tant que futur canal à huile (4),
le canal à huile (4) intégré étant prolongé de telle manière, que chacune de ses extrémités dépasse du pourtour extérieur (5, 6) des paliers à couler, en formant des extrémités de palier (14), et si bien que le canal à huile (4) est conçu de façon à ce que la première extrémité de palier (14a) sur le tourillon de vilebrequin (2) et la deuxième extrémité de palier (14b) sur le tourillon de bielle (3) se trouvent toutes deux du même côté du vilebrequin (1), et que lors de l'introduction de l'unité de noyau (9) dans le moule extérieur, les extrémités de palier (14a, 14b) sont orientées essentiellement verticalement au plan de division (X-X) du moule extérieur utilisé,
**en ce que** l'unité de noyau (9) est introduite par les extrémités de palier (14a, 14b) dans des évidements prévus à des endroits correspondants dans une moitié de moule extérieur, et **en ce que** pour chaque chambre de cylindre, une unité de noyau (9) est prévue et incorporée dans le moule extérieur,
**en ce que** le vilebrequin (1) est coulé avec le procédé de coulage correspondant, après fabrication du moule de coulage complet,
**en ce que** les noyaux de coulée (7a, 8a) sont évacués des espaces creux (7, 8), par des ouverture de dénoyautage (10) de petite taille, intégrées ou formées dans des régions à l'extérieur des surfaces de palier des tourillons de vilebrequin (2) et des tourillons de bielle (3), et **en ce que** les extrémités de palier (14a, 14b) du canal à huile (4) sont supprimées au cours des opérations de traitement.

14. Procédé selon la revendication 13,
**caractérisé en ce que**
le vilebrequin (1) est réalisé au cours d'un procédé de coulage avec un moule extérieur divisé en deux, en particulier au cours d'un procédé de coulage à masque, d'un procédé de coulage à moule à vert ou d'un procédé de coulage à moule de résine à froid.

15. Procédé selon la revendication 13,
**caractérisé en ce que**
le vilebrequin (1) est réalisé au cours d'un procédé de coulage à bloc-noyau, dans lequel des unités de noyau (9) pour la mise en forme des espaces creux (7, 8) sont intégrées dans des unités de bloc-noyau ayant été formées par une division du moule extérieur transversalement à l'étendue en longueur du vilebrequin, et ayant également été divisées en deux moitiés dans la longueur de l'étendue du vilebrequin, les unités de noyau (9) étant installées dans une moitié d'une unité de bloc-noyau, par le biais des extrémités de palier (14) des canaux à huile (4), dans la région d'un tourillon de vilebrequin (2) et dans celle d'un tourillon de bielle (3), les unités de bloc-noyau étant assemblées pour le forme de bloc complète et le vilebrequin (1) étant ensuite coulé.

16. Procédé selon l'une des revendications 13 à 15,
**caractérisé en ce que**
pour la formation d'un canal à huile (4), plusieurs conduits ont été réunis en un système de conduits (16), le système de conduits (16) comportant deux extrémités de palier (14) pour reposer de l'unité de noyau (9) dans une première moitié de moule extérieur, et au moins une extrémité d'appui (17) fermée pendant le coulage, dont la longueur est choisie de telle manière, que la face frontale fermée de l'extrémité d'appui (17) repose sur une deuxième moitié de moule extérieur après l'assemblage du moule de coulage.

17. Procédé selon la revendication 16,
**caractérisé en ce que**
un système de conduits conçu en forme de H, avec deux extrémités de palier (14) et au moins deux extrémités d'appui (17), est coulé.

18. Procédé selon l'une des revendications 13 à 17,
**caractérisé en ce que**
les extrémités de palier (14) du canal à huile (4) sont conçues de façon conique, pour reposer sans jeu, avec un angle petit.

19. Procédé selon l'une des revendications 13 à 18,
**caractérisé en ce que**
des noyaux de coulée (7a, 8a), comportant chacun au moins un prolongement (13) pour la formation d'une ouverture de dénoyautage (10) de petite taille dans le contour extérieur du vilebrequin (1) coulé, sont utilisés pour le dégagement d'espaces creux dans les tourillons de vilebrequin (2) et les tourillons de bielle (3).
